(19)

Europäisches Patentamt
European Patent Office
Office européen des brevets

(11) **EP 2 164 067 A1**

(12) **EUROPEAN PATENT APPLICATION**

(43) Date of publication:
**17.03.2010 Bulletin 2010/11**

(51) Int Cl.:
*G11B 7/0065* (2006.01)   *G11B 7/007* (2006.01)
*G11B 7/085* (2006.01)   *G11B 7/08* (2006.01)

(21) Application number: **09169087.5**

(22) Date of filing: **31.08.2009**

(84) Designated Contracting States:
**AT BE BG CH CY CZ DE DK EE ES FI FR GB GR HR HU IE IS IT LI LT LU LV MC MK MT NL NO PL PT RO SE SI SK SM TR**
Designated Extension States:
**AL BA RS**

(30) Priority: **10.09.2008   KR 20080089330**

(71) Applicant: **SAMSUNG ELECTRONICS CO., LTD.
Suwon-si
Gyeonggi-do 442-742 (KR)**

(72) Inventors:
• **Kim, In-joo**
  **Gyeonggi-do (KR)**
• **Park, Young-jae**
  **Gyeonggi-do (KR)**
• **Bae, Jae-cheol**
  **Gyeonggi-do (KR)**

(74) Representative: **Grootscholten, Johannes A.M. et al
Arnold & Siedsma
Sweelinckplein 1
2517 GK Den Haag (NL)**

(54)   **Optical disc and recording/reproducing method and apparatus for the optical disc**

(57)   An optical disc (13), and a recording/reproducing method and apparatus to record information on the optical disc. The optical disc includes an optical information storage layer, including a layer format region and a user data region. The layer format region is divided into virtual layers (RL1,RL2) that are disposed at different depths. The virtual layers include layer information to distinguish the virtual layers from one another.

EP 2 164 067 A1

**Description**

CROSS-REFERENCE TO RELATED APPLICATIONS

This application claims the benefit of Korean Patent Application No. 10-2008-0089330, filed on September 10, 2008, in the Korean Intellectual Property Office, the disclosure of which is incorporated herein, by reference.

BACKGROUND

1. Field

The present teachings relate to an optical recording/reproducing disk, apparatus and method.

2. Description of the Related Art

The information storage capacity of optical information storage media, which will hereinafter be referred to as optical discs, is increasing rapidly. Optical discs are classified as Compact Disks (CDs), Digital Versatile Disks (DVDs), High-Definition (HD) DVDs, Blue-ray Disks (BDs), and the like.

Recently, holographic information storage techniques have attracted much attention. Holographic optical discs use a photosensitive material, such as a light sensitive inorganic crystal or photopolymer, for a recording layer and store information in the photosensitive material, in the form of an interference pattern. The interference pattern is made by two coherent laser beams, i.e., a reference beam and a signal beam. A reference beam that is similar to a reference beam used for recording is radiated onto an interference pattern of a holographic optical disc, and a signal beam is produced that includes the stored information.

These holographic information storage techniques can be divided into volume holography, which records/reproduces information page by page, and micro-holography, which records/reproduces information using single-bit micro-holograms. The volume holography can simultaneously process bulky information, but its commercialization into information storage devices targeted for common consumers has been difficult to achieve, because it uses a very finely tuned optical system.

The micro-holography involves forming a fine interference pattern (micro-hologram), by causing interference between two condensed beams on a focal point of a holographic information storage medium. A number of the interference patters can be formed in the same plane, in the storage medium, to form a recording layer. A number of recording layers can be formed at different depths in the storage medium, thereby three-dimensionally recording information on the information storage medium.

The multiple recording layers increase the storage capacity of micro-holography. Conventional multi-layer optical discs, such as BDs, include reflective films to physically distinguish recording layers from one another, by using a reflected light intensity signal and the polarity of a signal, to form an optical focal point in a desired recording layer.

In contrast to conventional multi-layer optical discs, holographic optical discs do not include a reflective film to distinguish recording layers. Therefore, it is difficult to form an optical focal point in a desired recording layer of a holographic optical disc, and there is a need to conduct research on a recording/reproducing method for holographic optical discs.

SUMMARY

The present teachings provide an optical disc capable of recording information in a plurality of recording layers, and a recording/reproducing method and apparatus for the optical disc.

The present teachings provide an optical disc including an optical information storage layer having a layer format region and a user data region. The layer format region includes a plurality of virtual layers arranged in a thickness direction, and layer information to distinguish the plurality of virtual layers is recorded in each of the virtual layers.

According to aspects of the present teachings, the optical information storage layer may be formed of a photosensitive material capable of holographic recording.

According to aspects of the present teachings, layer format regions may be provided at an innermost circumference portion and an outermost circumference portion of the optical disc.

According to aspects of the present teachings, a reflective film is not formed in the optical information storage layer.

According to aspects of the present teachings, virtual layers corresponding to an uppermost portion and a lowermost portion of the optical information storage layer, from among the plurality of virtual layers, may be dummy layers, and information indicating that that recording will not be performed on lines extending from the dummy layers into the user data region, may be recorded in the dummy layers.

According to aspects of the present teachings, provided is a recording/reproducing method for an optical disc including an optical information storage layer. The recording/reproducing method includes setting a layer format region and a user data region in the optical information storage layer and, before recording data in the user data region, designating a plurality of positions in a thickness direction of the optical information storage layer, as a plurality of virtual layers in the layer format region, and recording layer information for distinguishing the virtual layers, in each of the plurality of virtual layers.

According to aspects of the present teachings, the layer format region may be set according to the eccentricity of the optical disc.

According to aspects of the present teachings, a plurality of layer format regions may be set.

According to aspects of the present teachings, the recording/reproducing method may further include designating positions on lines extending from the virtual layers into the user data region, as a plurality of recording portions, and recording data in the plurality of recording portions, by controlling an optical focal point, according to layer information recorded in virtual layers corresponding to each of the recording portions.

According to aspects of the present teachings, the recording/reproducing method may further include, reproducing data recorded in the recording portions, by controlling an optical focal point, according to layer information recorded in virtual layers corresponding to each of the recording portions.

According to aspects of the present teachings, when the depth of an optical focal point is moved in the optical disc, in order to record data in the recording portions or reproduce the recorded information, the movement may be performed in the layer format region.

According to aspects of the present teachings, there is provided a recording/reproducing apparatus for an optical disc including an optical information storage layer. The recording/reproducing apparatus includes: a hologram recording/reproducing optical system to record/reproduce information in the optical information storage layer; and a control unit to divide the optical information storage layer into a layer format region and a user data region, and prior to recording data in the user data region, to divide the information storage and user data regions into virtual layers that are disposed at different depths in the optical information storage layer, and to control the hologram recording/reproducing optical system to record layer information to distinguish the virtual layers, in each of the virtual layers, in the layer format region.

Additional aspects and/or advantages of the present teachings will be set forth in part in the description which follows and, in part, will be obvious from the description, or may be learned by practice of the present teachings.

BRIEF DESCRIPTION OF THE DRAWINGS

These and/or other aspects and advantages of the present teachings will become apparent and more readily appreciated from the following description of the exemplary embodiments, taken in conjunction with the accompanying drawings, of which:

FIG. 1 schematically illustrates the structure of a holographic optical disc, according to an exemplary embodiment of the present teachings;

FIG. 2 schematically illustrates a recording mark (hologram) formed by interference between a reference beam and a signal beam, in an optical information storage layer of the optical disc illustrated in FIG. 1;

FIGS. 3A through 3D illustrate an optical information storage layer of an optical disc, according to an exemplary embodiment of the present teachings;

FIGS. 4A and 4B illustrate the movement of focal points between recording portions of an optical disk, during recording/reproduction of information, according to an exemplary embodiment of the present teachings;

FIG. 5 schematically illustrates a configuration of a hologram recording/reproducing optical system, according to an exemplary embodiment of the present teachings;

FIG. 6 schematically illustrates a beam path of a servo beam, in a servo optical system of the hologram recording/ reproducing optical system illustrated in FIG. 5;

FIG. 7 schematically illustrates a beam path of a signal beam, in a recording mode of the hologram recording/ reproducing optical system illustrated in FIG. 5; and

FIG. 8 schematically illustrates a beam path of a reference beam, in a recording/reproduction mode of the hologram recording/reproducing optical system illustrated in FIG. 5.

DETAILED DESCRIPTION OF THE EXEMPLARY EMBODIMENTS

Reference will now be made in detail to the exemplary embodiments of the present teachings, examples of which are illustrated in the accompanying drawings, wherein like reference numerals refer to the like elements throughout.

The exemplary embodiments are described below, in order to explain the aspects of the present teachings, by referring to the figures.

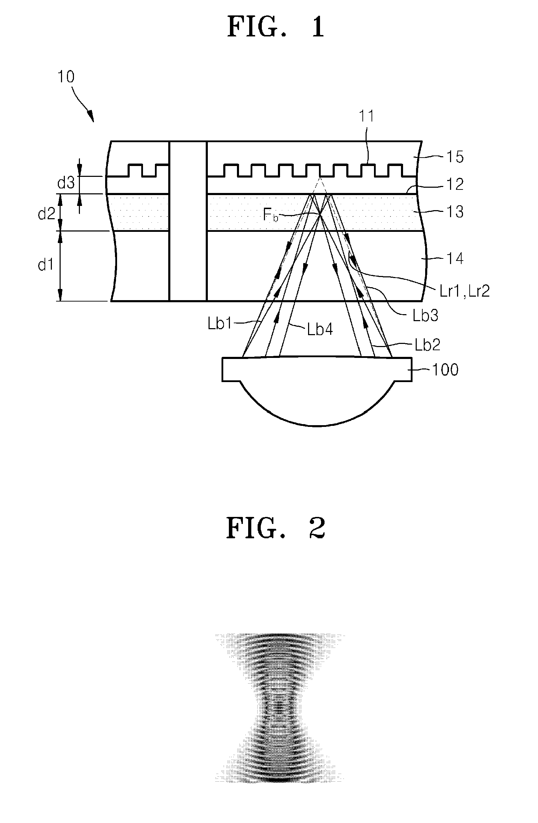

FIG. 1 schematically illustrates a structure of a holographic optical disc 10, according to an exemplary embodiment of the present teachings, and FIG. 2 schematically illustrates a recording mark (hologram) formed by interference between a reference beam and a signal beam, in an optical information storage layer of the optical disc 10.

Referring to FIG. 1, the optical disc 10 includes: a substrate 14; a substrate 15; a reflective film 11 to reflect a first beam Lr1 having a first wavelength; a reflective/transmissive film 12 to transmit the first beam Lr1 and reflect a second beam Lr2 having a different second wavelength; and an optical information storage layer 13. The first beam Lr1 may be red, and may be referred to as an incident servo beam Lr1 or a servo beam Lr1. The second beam Lr2 may be blue and may be referred to as a reflected servo beam Lr2 or a servo beam Lr2. Although the optical information storage layer 13 may include a plurality of recording portions, the optical information storage layer 13 does not include reflective films to physically distinguish the recording portions from one another. For example, the optical information storage layer 13 may be made of a photosensitive material capable of holographic recording.

In FIG. 1, Lb1 refers to a reference beam focused on a focal point Fb and then is projected to the reflective/transmissive film 12. Lb3 refers to a reference beam that is formed by the reflection of the reference beam Lb1. Lb2 refers to a signal beam that is focused on the focal point Fb, after being reflected from the reflective/transmissive film 12, and Lb4 indicates a reflection signal beam radiated after passing by the focal point Fb.

Like a conventional Compact Disk (CD), Digital Versatile Disk (DVD), or Blu-ray Disk (BD), the optical disc 10 has a diameter of, for example, 120 mm and has a hole formed in the center thereof. The substrates 14 and 15 operate to protect the optical information storage layer 13 and the reflective film 11. The substrates 14 and 15 may be made of polycarbonate, glass, or the like.

The optical information storage layer 13 may be made of a photopolymer that has a refractive index that changes according to the intensity of a beam radiated thereon. The storage layer 13 may react with, for example, a blue beam having a wavelength of about 405 nm. When the reference beam Lb1, which is blue beam, and the signal beam Lb2 interfere with one another, a recording mark a recording mark is formed in the optical information storage layer 13, as illustrated in FIG. 2. The recording mark may be referred to as a micro-hologram. The substrates 14 and 15 may have a refractive index that is generally the same as that of the optical information storage layer 13.

The optical information storage layer 13 has a thickness d2 that is larger than the height of the recording mark. For example, the optical information storage layer 13 may have a thickness of about 150 $\mu$m. In FIG. 1, d1 indicates the thickness of the substrate 14, and d3 indicates the minimum thickness of the reflective/transmissive film 12.

In the optical information storage layer 13, a single recording portion is formed by forming interference patterns using the signal beam Lb2 and the reference beam Lb1. Other recording portions can be formed by varying the depth at which interference patterns are formed in the storage layer 13.

In the reflective film 11, a land, a groove, or a pit may be formed to implement tracking and focusing of a servo beam. In particular, the servo beam Lr1 is reflected toward the substrate 14, by the reflective film 11, to form the servo beam Lr2.

The reflective/transmissive film 12 is a wavelength-selective reflective film that transmits red servo beams and reflects blue servo beams. The reflective/transmissive film 12 may be a cholesteric liquid crystal layer, in order to perform a circularly polarized beam separation operation. The cholesteric liquid crystal layer has a selective reflection feature, where only a circularly polarized beam component is reflected by the liquid crystal, when a rotation direction (right-handed rotation or left-handed rotation) of a spiral of the liquid crystal is the same as a direction of circularly polarized beam, and a wavelength thereof is of the same order as a spiral pitch of the liquid crystal.

The signal beam Lb2, after being reflected by the reflective/transmissive film12, is focused on the focal point Fb, and the reference beam Lb1 is directly focused on the focal point Fb. At this time, the signal beam Lb2 and the reference beam Lb1 may be projected to the optical disc 10 as, for example, right circularly polarized beam and left circularly polarized beam, respectively. Taking this point into account, the reflective/transmissive film 12 may, for example, reflect the signal beam Lb2, which is right circularly polarized blue beam, and transmit the reference beam Lb1, which is left circularly polarized blue beam, orthogonal to the signal beam Lb2.

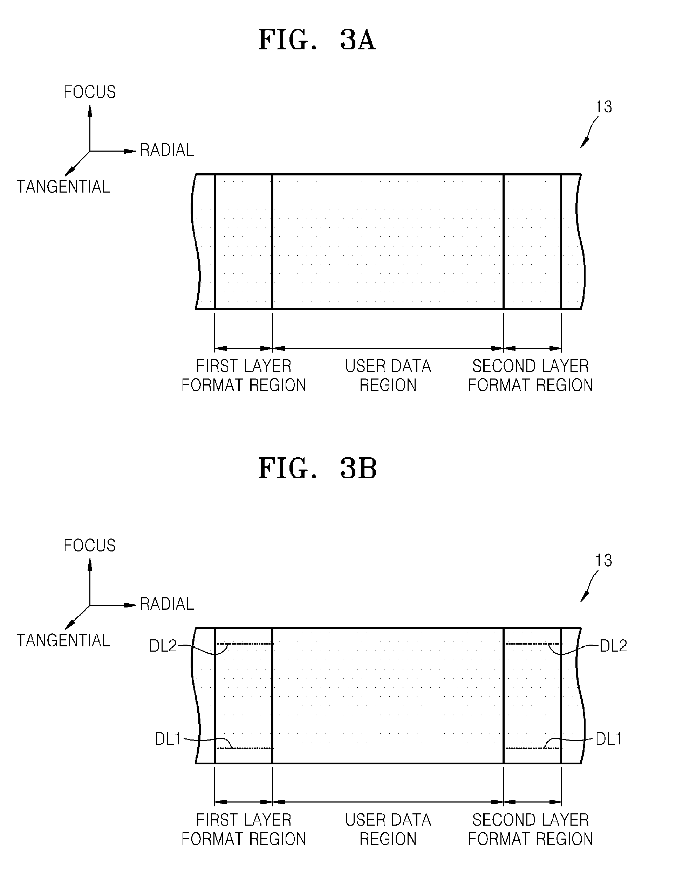

FIGS. 3A through 3D are views of the optical information storage layer 13 of the optical disc 10 and illustrate a process of recording/reproducing information on/from the optical information storage layer 13, according to an exemplary embodiment of the present teachings. In FIGS. 3A through 3D, a focus direction indicates a thickness direction (depth) of the optical information storage layer 13, a radial direction indicates a direction traversing tracks of the optical disc 10, along a radius of the optical disc 10, i.e., a tracking direction, and a tangential direction indicates a circumferential direction along the tracks of the optical disc 10.

In the recording/reproducing method a layer format region and a user data region are set in the optical information storage layer 13. The optical information storage layer 13 is also divided into virtual layers that are each disposed at a different depth in the optical information storage layer 13.. For convenience, portions of the virtual layers that are disposed in the layer format region can be referred to as format portions, and portions of the virtual layers that are disposed in the user data region can be referred to as recording portions. In addition, layer information, to distinguish the virtual layers from one another, is recorded in each of the virtual layers, and in particular, in the corresponding format portions.

FIG. 3A illustrates an example where the layer format region is set in the optical information storage layer 13, before the layer information is recorded in the layer format region. Although two layer format regions, are shown in FIG. 3A, any number of layer format regions may be provided. In addition, the position of the layer formats region may be determined, according to a bias or eccentricity of the optical disc 10. For example, the layer format region may be provided at an innermost circumference portion and/or an outermost circumference portion of the optical disc 10.

The layer format region is provided in the optical information storage layer 13, in order to record the layer information at different depths within the optical information storage layer 13. In spite of a desire to record information in a plurality of recording portions, if reflective films are not provided, for example, in the case of a holographic optical disc, it is may be difficult to control the positions of the recording portions.

Thus, in an exemplary embodiment of the present teachings, a structure as described above is adopted, to facilitate the positioning of the recording portions. In other words, the virtual layers are set, and the layer information distinguishing the relative locations (depths) of virtual layers is recorded in each of the virtual layers, in the layer format region.

FIG. 3B illustrates an example where dummy layers DL1 and DL2 are formed in the layer format region. Before the virtual layers are set, an uppermost recordable portion and a lowermost recordable portion of the optical information storage layer 13 are determined. To this end, the dummy layers DL1 and DL2 may be set in, for example, the uppermost portion and the lowermost portion of the optical information storage layer 13. The dummy layers DL1 and DL2 are set, according to start and end positions of the optical information storage layer 13 and an optical system margin. The smaller the intervals, between the dummy layers DL1 and DL2 and the start and end positions of the optical information storage layer 13, the greater the number of recording portions that can be formed, thereby increasing recording capacity.

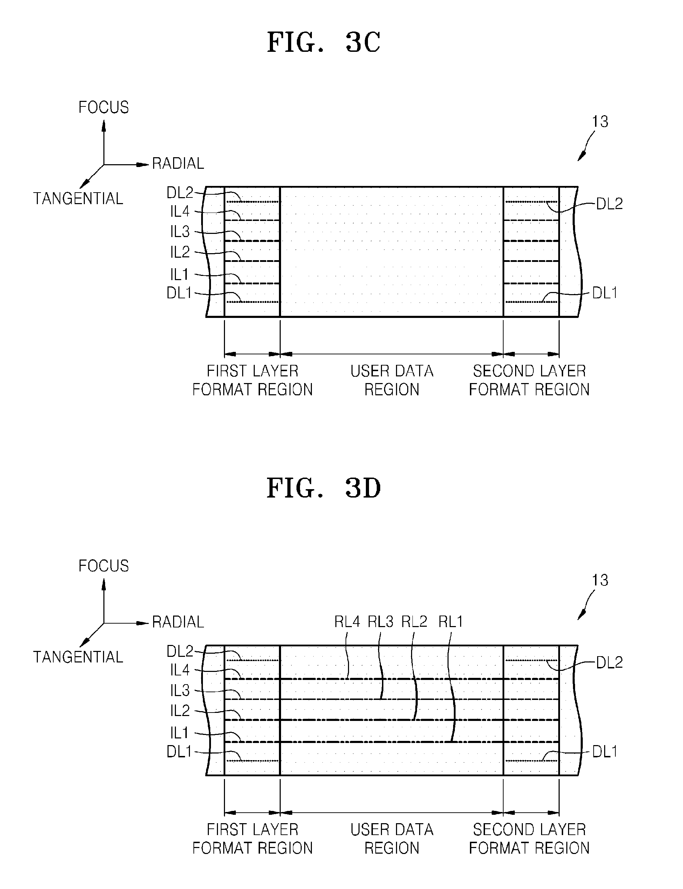

Referring to FIG. 3C, format portions IL1 - IL4 are set in the optical information storage layer 13, between the dummy layers DL1 and DL2. In the format layers IL1 - IL4, the layer information is recorded. For the recording of the layer information, a recording/reproducing (recording and/or reproducing) optical system performs a 2-beam focus control operation, along the format portions IL1 - IL4. In other words, in the virtual layers, the layer information is recorded in the layer format region, by using a 2-beam depth-of-focus operation, and information about a distance between recording portions is determined based on crosstalk between the layers.

Referring to FIG. 3D, recording portions RL1 - RL4 extend from the format portions IL1 - IL4, in the user data region . Layer information recorded in a virtual layer of interest is determined prior to recording data in the recording portions RL1 - RL4, and then data is recorded by controlling the position of an optical focal point, according to the recorded layer information. Recording is not performed in positions extending from the dummy layers DL1 and DL2 into the user data region. To this end, information may be recorded in the dummy layers DL1 and DL2, to indicate that recording will not be performed in corresponding portions of the user data region. However, it is not necessary to set the dummy layers DL1 and DL2. The positions of the format layer IL1 and the format layer IL4 may be set within a certain distance from the start and end positions of the optical information storage layer 13, so that information recording is possible in corresponding portion of the user data region.

Prior to the reproduction of the data recorded in the recording portions RL1 - RL4, layer information corresponding to a recording portion of interest is read. Then, the data recorded in the recording portion is reproduced, by controlling an optical focal point, according to the read layer information.

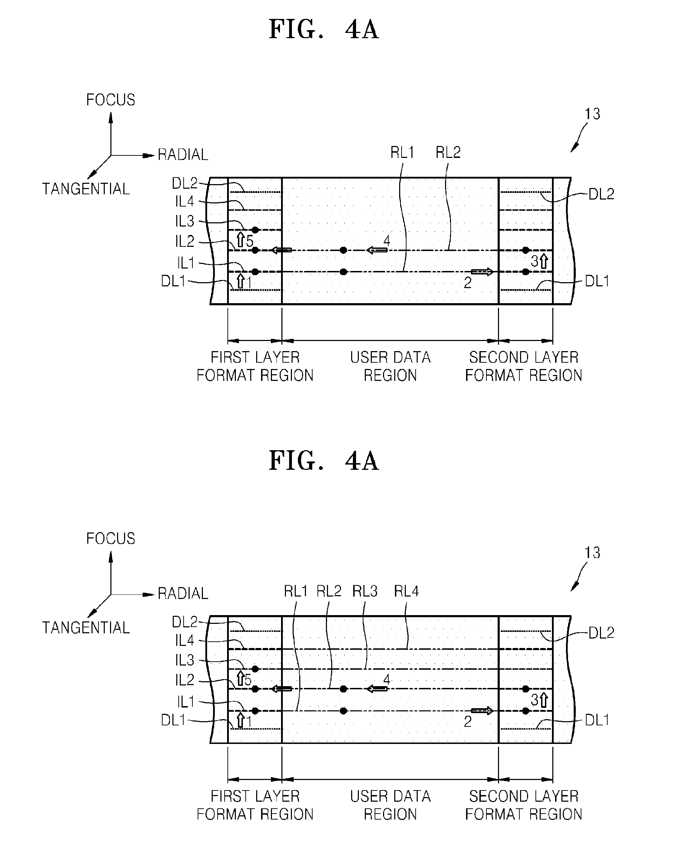

FIGS. 4A and 4B are views for explaining focal point movements between recording portions, during recording/reproduction, with respect to the optical disc 10, according to an exemplary embodiment of the present teachings. When the depth of the optical focal point in the optical disc 10 is changed, to record data in recording portions or to reproduce the recorded data, the movement of the optical focal point is performed in the layer format regions, in order to prevent the degradation of the optical information storage layer 13. For example, the optical information storage layer 13 may be made of a photosensitive material, and thus, the optical information storage layer 13 may be degraded by frequent movement of the optical focal point in the user data region. In the present exemplary embodiment, the layer format region is provided in addition to the user data region, and the movement of the optical focal point between recording portions is performed in the layer format region, thereby preventing degradation of the user data region of the optical disc 10.

FIG. 4A illustrates the movement of an optical focal point, to record data in the recording portions RL1 - RL4, by using layer information recorded in the format layers IL1 - IL4. Since recording is not be performed in portions of the user data region corresponding to the dummy layer DL1, the optical focal point is moved to the format layer IL1, according to the information recorded in the dummy layer DL1. Then, data is recorded in the recording portion RL1, according to the layer information recorded in the format layer IL1. The optical focal point is then moved to the next format layer IL2, which is included in the same virtual layer as the recording portion RL2.

Thereafter, the layer information recorded in the format portion IL2 is read, and the data is recorded in the recording portion RL2, according to the read layer information. However, the path of the optical focal point shown in FIG.

4A is only an illustrative example. For example, if only a single layer format region is provided, after recording in the recording portion RL1, the optical focal point may be moved back to the first layer format region, to move the optical focal point to next format portion IL2 and record information in the next recording portion RL2. In addition, for example, the format information included in a first virtual layer may be used to direct a focal point to a second virtual layer.

FIG. 4B illustrates a movement path of an optical focal point, for reproducing information recorded in the recording portions RL1 - RL4. Since no data is recorded on a portion of the user data region corresponding to the dummy layer DL1, the optical focal point is moved to the format portion IL1, according to the information recorded in the dummy layer DL1. Then, the data recorded in the recording portion RL1 is reproduced, by controlling the optical focal point according to the layer information recorded in the format portion IL1. The optical focal point is then moved to the next recording portion, in the second layer format region. Thereafter, the layer information recorded in the format portion IL2 is read, and the data recorded in the recording portion RL2 is reproduced, according to the read information. However, the movement path of the optical focal point shown in FIG. 4B is only an illustrative example. For example, if only a single layer format region is provided, after reproducing data from the recording portion RL1, the optical focal point may be moved back to the layer format region, so as to move the optical focal point to next format portion IL2.

A recording/reproducing apparatus, according to an exemplary embodiment of the present teachings, is used for an optical disc having an optical information storage layer. The apparatus includes a hologram recording/reproducing optical system for recording/reproducing information in/from the optical information storage layer, and a control unit for controlling the hologram recording/reproducing optical system.

The control unit divides the optical information storage layer into a layer format region and a user data region, designates different depths of the optical information storage layer as virtual layers, which include format portions in the layer format region. The control unit controls the hologram recording/reproducing optical system to record layer information to distinguish the virtual layers from one another, in each of the format portions, prior to recording data in the virtual layers, in the user data region.

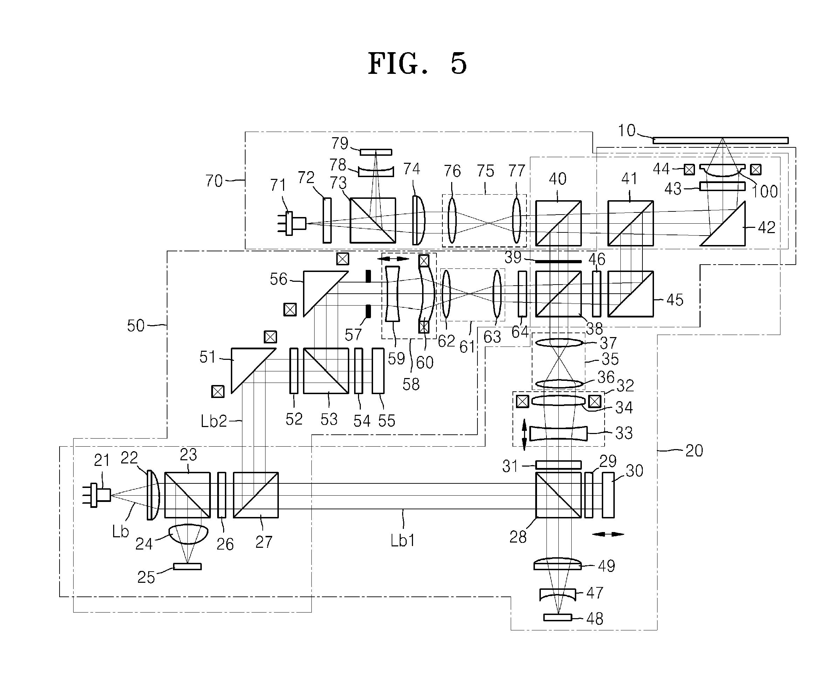

FIG. 5 schematically illustrates a configuration of the hologram recording/reproducing optical system. For example, the recording/reproducing process described with reference to FIGS. 3A through 4D may be performed by the hologram recording/reproducing optical system.

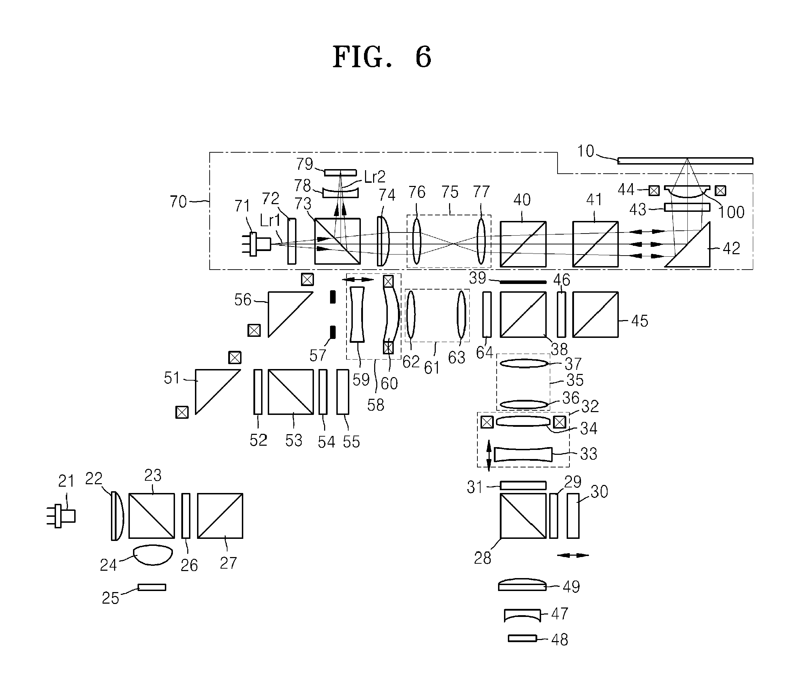

Referring to FIG. 5, the hologram recording/reproducing optical system includes: a servo optical system 70 that forms a beam path of a servo beam; an objective lens 100 that condenses a beam for recording/reproducing information on/from the optical disc 10; a signal beam optical system 50 to radiate the signal beam Lb2 onto the optical disc 10; and a reference beam optical system 20 to radiate the reference beam Lb1 during information recording/reproduction, onto the optical disc 10. Hereinafter, detailed structures of the servo optical system 70, the signal beam optical system 50, and the reference beam optical system 20 will be described with reference to FIGS. 6 through 8, respectively.

FIG. 6 schematically illustrates a beam path of a servo beam, in the servo optical system 70. Referring to FIG. 6, the servo optical system 70 may radiate a first beam from a first light source 71, i.e., the red servo beam Lr1, onto the optical disc 10, and to collect the servo beam Lr2, which is reflected from the reflective film 11.

The first light source 71 may emit the servo beam Lr1, which may have, for example, a wavelength of about 660 nm. The servo beam Lr1 is split into a main beam and 2 sub-beams, by a grating 72. The servo beam Lr1 (main beam) passes though a collimating lens 74, after being transmitted through a polarized beam splitter 73.

The grating 72 may perform the splitting, such that the amount of the main beam is larger than, or the same as, that of the sub-beams. In FIG. 5, the sub-beams are not shown. The polarized beam splitter 73 may be structured to transmit a P-polarized component of the servo beam Lr1, while reflecting an S-polarized component of the servo beam Lr1. The collimating lens 74 converts the servo beam Lr1 emitted from the first light source 71, into a parallel beam. The servo beam Lr1 is then projected to a correction lens 75. The correction lens 75 may include condenser lenses 76 and 77. The servo beam Lr1 is projected from the correction lens 75, to dichroic prisms 40 and 41, and then is reflected by a mirror 42 to a quarter wavelength plate (QWP) 43. The QWP 43 converts the servo beam Lr1 into a circularly polarized beam, which is then projected to the objective lens 100. The objective lens 100, as illustrated in FIG. 1, condenses the servo beam Lr1 onto the reflective film 11, at a focal point Fr. The reflection converts the servo beam Lr1 into the servo beam Lr2, which is projected towards the objective lens 100.

The objective lens 100 is optimized for a second beam emitted from a second light source 21, i.e., a hologram recording/reproducing blue beam, and for the condensation of the servo beam Lr1 onto the reflective film 11, according to a relationship, such as an optical distance between the correction lens 75 and the objective lens 100. For the servo beam Lr1, the objective lens 100 may operate as, for example, as a condenser lens having a numerical aperture of about 0.63.

The dichroic prism 40 may transmit nearly 100% of a red beam (servo beam) and reflect nearly 100% of a blue beam (hologram recording/reproducing beam, and a reference beam). The dichroic prism 41 may transmit nearly 100% of the red beam, and nearly 100% of, for example, a P-polarized component of the blue beam. The dichroic prism 41 may reflect nearly 100% of, for example, an S-polarized component of the blue beam. The mirror 42 may reflect nearly 100% of both the red beam and the blue beam, and the QWP 43 may convert a linear polarized beam into circular polarized beam, for both the red beam and the blue beam.

The reflected servo beam Lr2, after sequentially passing through the objective lens 100, the QWP 43, the mirror 42, the dichroic prisms 40 and 41, and the correction lens 75, is polarized and then condensed by the collimating lens 74. The reflected servo beam Lr2 is then reflected by the polarized beam splitter 73, toward a first optical detector 79. An astigmatic lens, e.g., a cylindrical lens 78, may be further provided between the polarized beam splitter 73 and the first optical detector 79, in order to focus the servo beam Lr2 according to an astigmatic method.

Since a bias and/or eccentricity may occur in the optical disc 10, a target track and a focusing position therefore may also change. Thus, the servo optical system 70 focuses the servo beam Lr1 on the focal point corresponding to the target track. To this end, the servo beam Lr1 is moved in a focus direction and a tracking direction that correspond to a thickness direction and a radial direction of the optical disc 10, respectively.

The servo beam Lr1 can be moved in the focus direction and the tracking direction, via a driving unit 44. The driving unit includes a 2-axis actuator to drive the objective lens 100 along the focus direction and the tracking direction. The driving unit 44 may include a 3-axis actuator to drive the objective lens 100 in a tilt radial direction, as well as the focus and tracking directions.

The objective lens 100 focuses the servo beam Lr1 on the reflective film 11, and the reflected servo beam Lr2 is received by the first optical detector 79. When reflected servo beam Lr2 is received by the first optical detector 79, it reflects focusing and tracking states.

Although not shown in FIG. 6, in order to detect a focus error signal and a tracking error signal, the first optical detector 79 may include a main optical detector having beam-receiving regions Ar, Br, Cr, and Dr to receive a main beam, and first and second sub optical detectors having 2 beam-receiving regions (Er, Fr) and (Hr, Gr) disposed in a radial direction, at both sides of the main optical detector, to receive a sub-beam.

Focus control may be performed with an astigmatic method, by using a signal detected by the main optical detector. A focus error signal FESr can be obtained by using Equation 1 below, based on a main beam detection signal received by the main optical detector. The focus error signal FESr is input to a control unit (not shown), in order to be used for focus control of the objective lens 100. In the following description, a beam-receiving region of an optical detector, and a signal detected from the beam-receiving region, will be represented by the same symbol, for convenience of explanation.

$$FESr = (Ar + Cr) - (Br + Dr) \qquad \ldots\ldots\ldots\ldots\ldots\ldots.. \quad (1)$$

Tracking control may be performed with a differential push-pull method, by using signals detected by the first and second sub optical detectors. A tracking error signal DPPr obtained using the differential push-pull method expresses the amount of deviation of the servo beam Lr1 from a target track and can be obtained as follows:

$$MPPr = (Ar + Dr) - (Br + Cr)$$
$$SPPr1 = Er - Fr$$
$$SPPr2 = G1 - Hr$$
$$DPPr = MPPr - k(SPPr1 + SPPr2)$$
$$\ldots\ldots\ldots\ldots\ldots\ldots. \quad (2),$$

where k indicates a gain.

As such, the servo optical system 70 radiates the servo beam Lr1 onto the reflective film 11 of the optical disc 10, and uses the reflected servo beam Lr2 for focus control and tracking control of the objective lens 100.

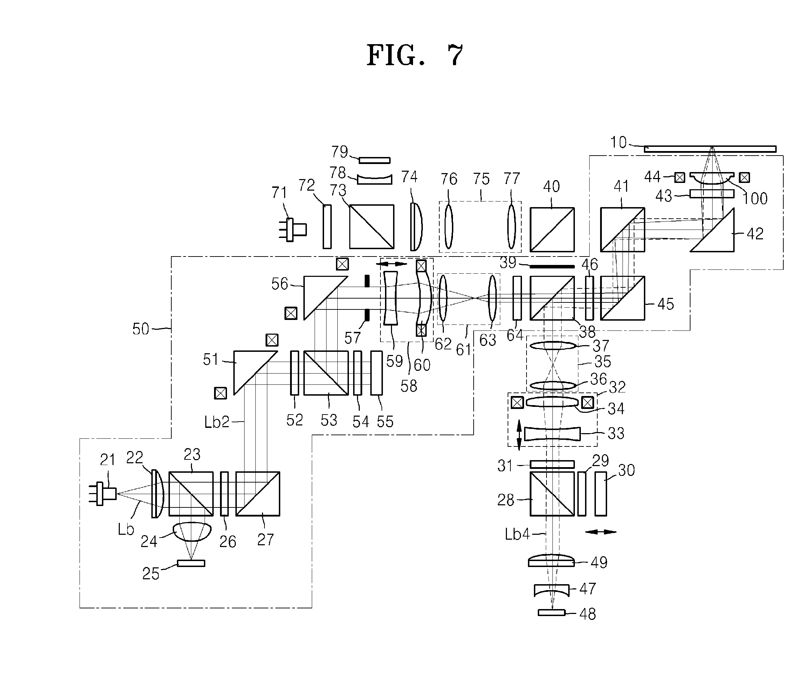

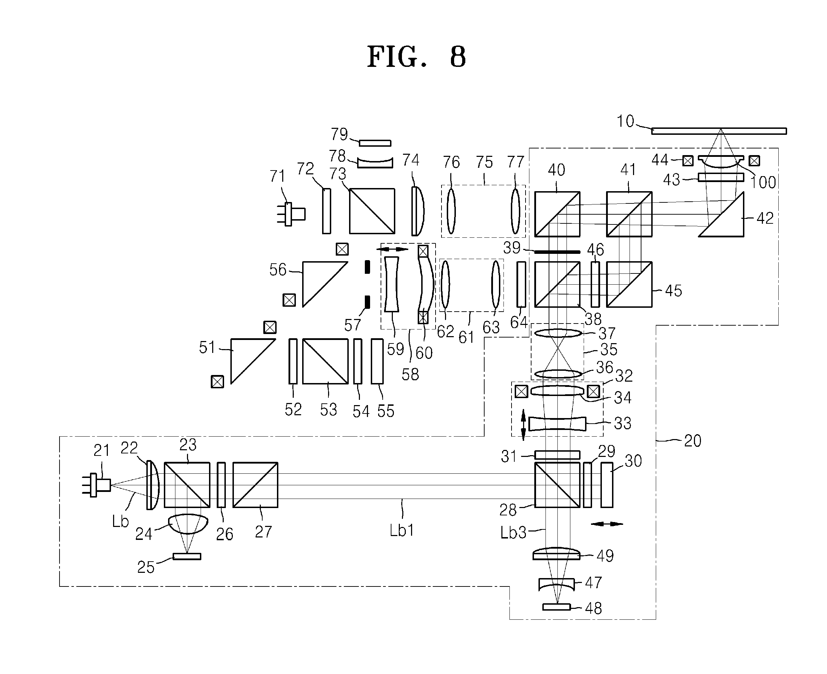

FIG. 7 schematically illustrates a beam path of a signal beam, in a recording mode of the hologram recording/reproducing optical system illustrated in FIG. 5. FIG. 8 schematically illustrates a beam path of a reference beam, in a recording/reproduction mode of the hologram recording/reproducing optical system illustrated in FIG. 5.

Referring to FIGS. 7 and 8, the second beam e.g., a blue beam Lb having a wavelength of about 405 nm, is emitted from the second light source 21. The blue beam Lb passes through a collimating lens 22 and is converted into parallel beam. The parallel blue beam Lb passes through an active half wave plate 26 and is reflected by and transmitted through a polarized beam splitter 27. Herein, the reflected portion of the blue beam forms the signal beam Lb2, and the transmitted portion of the blue beam forms the reference beam Lb1.

The active half wave plate 26 is an on/off-type half wave plate that operates as a half wave plate when electricity is applied thereto. Thus, when electricity is applied to the half wave plate 26, the half wave plate rotates a polarization direction of the incident blue beam Lb, by a predetermined angle, such that the signal beam Lb2 is reflected by the polarized beam splitter 27, and the reference beam Lb1 is transmitted through the polarized beam splitter 27.

Herein, it is assumed that the active half wave plate 26 does not operate as the half wave plate during a reproduction mode, during which no electricity is applied thereto. Thus, the blue beam Lb, e.g., all or most of a P-polarized blue beam Lb, is transmitted through the polarized beam splitter 27 and travels along a beam path of the reference beam Lb1, during the recording mode.

The active half wave plate 26 may include a rotation driving device, such that a polarization direction may be rotated by a predetermined angle, to adjust intensity distributions of an S-polarized beam and a P-polarized beam. The blue beam Lb is divided in about half, by the polarized beam splitter 27, to form the reference beam Lb1 and the signal beam Lb2. The division rates are adjustable by the active half wave plate 26.

The S-polarized signal beam Lb2 is reflected by a Galvano mirror 51 and then is converted into a P-polarized beam by a half wave plate 52. After being transmitted through a polarized beam splitter 53, the P-polarized beam is converted into a circularly polarized beam by a QWP 54, and then is reflected by a mirror 55. The reflected signal beam Lb2 is converted into an S-polarized beam by the QWP plate 54. After being reflected by the polarized beam splitter 53, the S-polarized beam is transmitted to a Galvano mirror 56. The Galvano mirrors 51 and 56 change an angle of a reflected beam and may adjust a beam path of the signal beam Lb2, according to the control of a control unit (not shown).

The signal beam Lb2 reflected by the Galvano mirror 56 passes through a slit 57 and is projected to a beam expander 58. The beam expander 58 may include movable lenses 59 and 60. The signal beam Lb2 is diverged by the movable lens 59 and is collected by the movable lens 60. Then the signal beam Lb2 passes through a relay lens 61 and is projected to a half wave plate 64, to be converted into a P-polarized beam.

The movable lens 59 is moved in an optical axis direction, by a stepping motor or a Piezo motor. The movable lens 60 is moved in the optical axis direction, by an actuator that is similar to those of the driving unit 44 for the objective lens 100. The movable lens 60 may be more finely controlled than the movable lens 59. A movement distance of the movable lens 59 may be greater than that of the movable lens 60.

The relay lens 61 is provided to secure a space between the objective lens 100 and the movable lens 60. To this end, the relay lens 61 may include convex lenses 62 and 63.

The P-polarized signal beam Lb2 is transmitted from the half wave plate 64, through a polarized beam splitter 38, and then to an active half wave plate 46. A polarization direction of the incident P-polarized signal beam Lb2 is rotated by the active half wave plate 46, such that the P-polarized signal beam Lb2 is converted to mainly include an S-polarized beam component. The P-polarized signal beam Lb2 may be converted by the active half wave plate 46 to include about 70% of an S-polarized beam component and about 30% of a P-polarized beam component.

The signal beam Lb2 is reflected by a mirror 45, and only the S-polarized beam component thereof is transmitted to a mirror 42, converted by the QWP 43 into a circularly polarized beam, and then transmitted to the objective lens 100. The signal beam Lb2 is condensed by the objective lens 100 and is reflected by the reflective/transmissive film 12 (see FIG. 1) including the cholesteric liquid crystal layer, to form the focal point Fb. The objective lens 100 condenses the signal beam Lb2 and may operate as, for example, a condenser lens having a numerical aperture of about 0.4.

The signal beam Lb2 passes through the focal point Fb and is radiated back to the objective lens 100, as a reflected signal beam Lb4. This reflected signal beam Lb4 is converted into an S-polarized beam by the QWP 43, and after being reflected by the mirror 42, the dichroic prism 41, and the mirror 45, is then transmitted to the active half wave plate 46. The S-polarized reflected signal beam Lb4 is converted by the active half wave plate 46, so as to include, for example, about 30% of an S-polarized beam component and about 70% of a P-polarized beam component. The S-polarized beam component is reflected by the polarized beam splitter 38. The reflected S-polarized reflected signal beam Lb4 is transmitted through a relay lens 35, onto a beam expander 32. This reflected signal beam Lb4 is converted into a P-polarized beam by a half wave plate 31, is transmitted through a polarized beam splitter 28, and is condensed by a condenser lens 49. Then astigmatism is generated by a cylindrical lens 47, and the reflected signal beam Lb4 is received by a second optical detector 48.

Since bias and eccentricity may occur in the optical disc 10, a target track and a focus position therefore may also change. Thus, as previously described, focusing and tracking are controlled by a servo optical system, using a red servo beam and a control unit (not shown). However, the signal beam Lb2 may deviate from the focal point Fb of the reference beam Lb1, due to movements of the objective lens 100. Thus, the signal beam optical system 50 adjusts the optical positions of various optical parts, by reflecting a reception state of the reflection signal beam Lb4, using the second optical detector 48 and based on the amount of focal deviation of the signal beam Lb2 from the focal point Fb.

For focus and tracking control of the signal beam Lb2 in the recording mode, the second optical detector 48 may include 4 beam-receiving regions Ab, Bb, Cb, and Db, with which the second optical detector 48 detects the reflection signal beam Lb4. A signal processing unit (not shown) performs focus control using an astigmatic method, calculates a focus error signal FESb using Equation 3 below, based on detection signals of the beam-receiving regions Ab, Bb, Cb, and Db, and provides the focus error signal FESb to the control unit.

$$FESb = (Ab + Cb) - (Bb + Db) \qquad\qquad \text{.......................} \cdot (3)$$

The focus error signal FESb expresses the amount of difference, in terms of focus direction, between the focal point Fb of the reference beam Lb1 and the focal point of the signal beam Lb2.

Tracking control is performed by using a push-pull signal and a tracking error signal RPPb that is calculated by using Equation 4 below, and then is provided to the control unit.

$$RPPb = (Ab + Db) - (Bb + Cb) \qquad\qquad \text{.......................} \cdot (4)$$

The tracking error signal RPPb expresses the amount of difference, in terms of tracking direction, between the focal point Fb of the reference beam Lb1 and the focal point of the signal beam Lb2.

A tangential error signal TPPb, which is used for tangential control, may also be generated by using Equation 5 below. Tangential control involves positioning the signal beam Lb2 in the focal point Fb of the reference beam Lb1, in a tangential direction of the optical disc 10.

$$TPPb = (Ab + Bb) - (Cb + Db) \qquad\qquad \text{.......................} \cdot (5)$$

The tangential error signal TPPb expresses the amount of difference, in terms of tangential direction of the optical disc 10, between the focal point Fb of the reference beam Lb1 and the focal point of the signal beam Lb2.

The control unit generates a focus drive signal, based on the focus error signal FESb, and provides the focus drive signal to, for example, the movable lens 60 of the beam expander 58, so as to perform focus control on the movable lens 60. The focus control is performed to reduce the amount of difference in a focus direction, between the focal point Fb of the reference beam Lb1 and the focal point of the signal beam Lb2. The control unit also generates a tracking drive signal, based on the tracking error signal RPPb, and provides the tracking drive signal to, for example, the Galvano mirror 56, so as to perform tracking control on the Galvano mirror 56. The tracking control is to reduce the amount of difference in a tracking direction, between the focal point Fb of the reference beam Lb1 and the focal point of the signal beam Lb2.

The control unit may also generate a tangential drive signal, based on the tangential error signal TPPb, and provides the tangential drive signal to, for example, the Galvano mirror 51, so as to perform tangential control on the Galvano mirror 51. The tangential control is to reduce the amount of difference, in terms of tangential direction of the optical disc 10, between the focal point Fb of the reference beam Lb1 and the focal point of the signal beam Lb2.

As such, the signal beam optical system 50 radiates the signal beam Lb2 to the optical disc 10, receives the reflection signal beam Lb4 from the reflective/transmissive film 12 (see FIG. 1), and provides the reception result to the signal processing unit. The control unit of the optical system 50 performs focus control on the beam expander 58 and the relay lens 61, tangential control on the Galvano mirror 51, and tracking control on the Galvano mirror 56, so as to form the focal point of the signal beam Lb2 in the focal point Fb of the reference beam Lb1.

Referring to FIG. 8, in the reference beam optical system 20, the blue beam Lb emitted from the second light source 21 is converted into a parallel beam, by passing through the collimating lens 22. The blue beam Lb includes an S-polarized beam component and a P-polarized beam component, due to passing through the active half wave plate 26. The S-polarized beam component of the blue beam Lb is reflected by the polarized beam splitter 27 and is used as the signal beam Lb2 as described above.

The P-polarized beam component of the blue beam Lb is transmitted through the polarized beam splitter 27 and is used as the reference beam Lb1. The reference beam Lb1 is transmitted to the polarized beam splitter 28. The P-polarized reference beam Lb1 is transmitted through the polarized beam splitter 28, is converted into a left circularly polarized beam by a QWP 29, is reflected by a mirror 30, and then is converted into an S-polarized beam by the QWP 29. Then the P-polarized reference beam Lb1 is reflected by the polarized beam splitter 28 and travels toward the half wave plate 31. The S-polarized reference beam Lb1 is converted into a P-polarized beam by the half wave plate 31 and then is transmitted to the beam expander 32.

The reference beam optical system 20 includes a moveable mirror 30. The beam path length of the reference beam Lb1 can be changed by the movement of the mirror 30, in order to match the beam path length of the signal beam Lb2. To this end, the mirror 55 of the signal beam optical system 50 may be driven, or both of the mirror 55 and the mirror 30 may be driven. When a laser diode having a coherence distance of about several hundreds of microns is used as the second light source 21, a good recording mark may not be formed in the focal points of the reference beam Lb1 and the signal beam Lb2, if the difference between the beam path lengths of the reference beam Lb1 and the signal beam Lb2 exceeds the coherence distance. In order to form a good hologram, it is necessary to adjust the difference between the beam path lengths to below the coherence distance, by controlling, for example, the mirror 30.

The P-polarized reference beam Lb1 is transmitted to the beam expander 32, where it is expanded by a movable lens 33 and is then re-converged by a movable lens 34. The reference beam Lb1 then passes through a relay lens 35 and is transmitted to a polarized beam splitter 36. Since this reference beam Lb1 is a P-polarized beam as stated above, the reference beam Lb1 is transmitted through the polarized beam splitter 36, to a shutter 39.

The beam expander 32 and the relay lens 35 may respectively operate substantially in the same manner as the beam expander 58 and the relay lens 61 of the signal beam optical system 50. The shutter 39 may block or transmit the reference beam Lb1, under the control of the control unit. When the reference beam Lb1 passes through the shutter 39, the reference beam Lb1, which is a P-polarized blue beam, is reflected by the dichroic prism 40 and passes through the dichroic prism 41. Then the reference beam Lb1 is transmitted to the mirror 42. The reference beam Lb1 is reflected by the mirror 42, converted into a left circularly polarized beam by the QWP 43, and then condensed on the optical disc 10 by the objective lens 100.

The objective lens 100 may operate as, for example, a condenser lens having a numerical aperture of about 0.65, according to a relationship, such as an optical distance between the beam expander 32 and the objective lens 100. Herein, the numerical aperture of the objective lens 100 for the reference beam Lb1 is greater than that for the signal beam Lb2. This is because the reference beam Lb1 is condensed by the objective lens 100 and is then immediately focused in the focal point Fb, whereas the signal beam Lb2 is condensed by the objective lens 100 and, after being reflected by the reflective/transmissive film 12 (see FIG. 1), is focused in the focal point Fb. Thus, a focal distance of the signal beam Lb2 is greater than that of the reference beam Lb1. However, the present teachings are not limited to these features.

During recording, a portion of the reference beam Lb1, after being reflected by the reflective/transmissive film 12 (see FIG. 1), hardly ever returns to the objective lens 100. The reflective/transmissive film 12 (see FIG. 1) mainly reflects only right circularly polarized beams and thus, does not reflect the reference beam Lb1 that is incident to the optical disc 10.

In a reproduction mode, the active half wave plate 26 is turned off, so as not to operate as a half wave plate, and the P-polarized blue beam Lb is emitted from the second light source 21 and passes through the active half wave plate 26, without being polarized. After being transmitted through the polarized beam splitter 27, the blue beam Lb travels along the beam path of the reference beam Lb1 used in the recording mode. Since the blue beam Lb used in the reproduction mode is the same as the reference beam Lb1 used in the recording mode, it is assumed that the blue beam Lb is the reference beam Lb1.

When the recording mark, i.e., the hologram, recorded in an optical information storage layer of the optical disc 10 is reproduced, a reference beam to reproduce the hologram (hereinafter reproduction beam), is transmitted to the objective lens 100. The reference beam Lb1 is transmitted to the optical disc 10 as a left circularly polarized beam. The reproduction beam reflected by the hologram is a right circularly polarized beam, because only its traveling direction is changed, without changing a rotation direction of an electric field vector. The right circularly polarized reproduction beam, after being converted into an S-polarized beam by the QWP 43, is sequentially reflected by the mirror 42, the dichroic prism 41, and the mirror 45, and then is transmitted to the active half wave plate 46.

Since the active half wave plate 46 does not operate as a half wave plate during reproduction, the S-polarized reproduction beam passes through the active half wave plate 46 without undergoing polarization. After being reflected by the polarized beam splitter 38, the S-polarized reproduction beam is transmitted to the relay lens 35. The S-polarized reproduction beam is then converted into a parallel beam, by passing through the beam expander 32. After being converted into P-polarized beam by the half wave plate 31, the beam is transmitted through the polarized beam splitter 28. The resultant P-polarized reproduction beam is condensed be the condenser lens 49, after which the P-polarized reproduction beam passes through the cylindrical lens 47 and is received by the second optical detector 48. From a reproduction beam signal detected by the second optical detector 48, recording mark hologram information recorded in a predetermined recording portion can be determined.

Information recording by the recording/reproducing apparatus is performed as described below. The servo optical system 70 radiates the servo beam Lr1 onto the optical disc 10, performs focus control and tracking control on the objective lens 100, based on a detection result of the servo beam Lr2 reflected from the reflective film 11, and controls the focal point Fr of the servo beam Lr1, to follow a target track.

The signal beam optical system 50 radiates the blue signal beam Lb2 onto the optical disc 10 and positions the focal point Fb of the signal beam Lb2 in the target track, by controlling the position-controlled objective lens 100. A target depth corresponding to the focal point Fb is adjusted by adjusting the position of the movable lens 59 of the beam expander 58, thereby positioning the blue signal beam Lb2 in the focal point Fb.

The reference beam optical system 20 radiates the reference beam Lb1 onto the optical disc 10, adjusts the position of the movable lens 33 of the beam expander 32, and controls the shutter 39, so as to allow the reference beam Lb1 to pass there through. The reference beam Lb1 is thereby positioned in the focal point Fb.

Herein, the recording power of the second light source 21 is adjusted by detecting a beam received by a front optical detector 25. A portion of the beam emitted from the second light source 21 is split by a beam splitter 23 and, after being condensed by a condenser lens 24, is received by the front optical detector 25.

The signal beam Lb2 may deviate from the desired focal point Fb, due to the bias and eccentricity of the optical disc 10. Taking account of this possibility, tangential control and tracking control may be performed on the Galvano mirror 51 and the Galvano mirror 56, and focus control may be performed on the movable lens 60 of the beam expander 58, based on a detection result of the reflection signal beam Lb4.

When the reference beam Lb1 and the signal beam Lb2 are mixed in the focal point Fb, the mirror 30 is moved to adjust the difference between the beam path lengths of the reference beam Lb1 and the signal beam Lb2, to below the coherence distance. By doing so, a good recording mark can be recorded.

When information is recorded in recording portions, as previously described with reference to FIGS. 3A through 3D, the control unit (not shown) divides the optical information storage layer into the layer format region and the user data region, designates positions that are at different depths (in a thickness direction) in the optical information storage layer as virtual layers, and controls the hologram recording/reproducing optical system to record layer information in each of the virtual layers, prior to recording data in the user data region. The control unit (not shown) performs a control operation, such that focal movement between recording portions is performed in the layer format region.

Information reproduction by the recording/reproducing apparatus is performed as described below. The servo optical system 70 radiates the servo beam Lr1 onto the optical disc 10, performs focus control and tracking control on the objective lens 100, based on a detection result of the servo beam Lr2 reflected from the reflective film 11, and controls the focal point Fr of the servo beam Lr1 to follow a target track.

The reference beam optical system 20 radiates the reference beam Lb1 onto the optical disc 10. The reference beam Lb1 is condensed by, and its focal point Fb is positioned in a target track, by the position-controlled objective lens 100. In addition, coarse control is performed by the movable lens 33 of the beam expander 32, and fine control is performed by the movable lens 34, whereby the position of the focal point Fb of the reference beam Lb1 is adjusted.

Since the active half wave plate 26 does not operate as a half wave plate when no electricity is applied thereto, all or most of the blue beam Lb emitted from the second light source 21 becomes the reference beam Lb1, thereby improving reproduction efficiency. The active half wave plate 26 transmits the reference beam Lb1 there through, according to the operation of the shutter 39.

The reference beam Lb1 is radiated to a recording mark, by which a reproduction beam is generated. This reproduction beam is detected by the second optical detector 48, to obtain a reproduction signal. Herein, when the active half wave plate 46 is not activated, reproduction beam receiving efficiency can be improved.

When information recorded in a plurality of recording portions of the optical disc 10 is reproduced, the hologram recording/reproducing optical system controls an optical focus and reproduces information recorded in a recording portion, according to layer information recorded in a format layer, which corresponds to the recording portion. The control unit (not shown) performs a control operation, such that beam movement between recording portions is performed in the layer format region.

Although a few exemplary embodiments of the present teachings have been shown and described, it would be appreciated by those skilled in the art that changes may be made in this embodiment without departing from the principles and spirit of the teachings, the scope of which is defined in the claims and their equivalents.

**Claims**

1. An optical disc comprising an optical information storage layer comprising:

   virtual layers disposed at different depths in the information storage layer;
   a layer format region; and
   a user data region,

   wherein the virtual layers have layer information to distinguish the virtual layers from one another, recorded in the layer format region.

2. The optical disc of claim 1, wherein the optical information storage layer is formed of a photosensitive material capable of holographic recording.

**3.** The optical disc of claim 1 or 2, further comprising a plurality of the layer format regions.

**4.** The optical disc of claim 3, wherein the layer format regions are provided at an innermost circumference portion and an outermost circumference portion of the optical disc.

**5.** The optical disc of any one of claims 1 to 4, further comprising dummy layers disposed at an uppermost portion and a lowermost portion of the layer format region, the dummy layers having information indicating that user data will not be recorded in portions of the recording region that correspond to the dummy layers.

**6.** A recording/reproducing method for an optical disc comprising an optical information storage layer, the recording/ reproducing method comprising:

dividing the optical information storage layer into a layer format region and a user data region;
dividing the layer format and user data regions into virtual layers that are each disposed at different depths in the optical information storage layer; and
recording portion information in each of the virtual layers, in the layer format regions, to distinguish the virtual layers from one another.

**7.** The recording/reproducing method of claim 6, wherein the division of the optical information storage layer is performed according to the eccentricity of the optical disc.

**8.** The recording/reproducing method of claim 6 or 7, wherein the division of the optical information storage layer comprises dividing the optical information storage layer into a plurality of the layer format regions.

**9.** The recording/reproducing method of any one of claims 6 to 8, further comprising:

designating portions of the virtual layers that are disposed in the user data region as recording portions, and portions of the virtual layers that are disposed in the layer format region as format portions; and
recording data in the recording portions, by controlling an optical focal point according to the layer information of the virtual layers that correspond to each of the recording portions.

**10.** The recording/reproducing method of claim 9, further comprising reproducing the data, by controlling an optical focal point according to the layer information of the virtual layers that correspond to each of the recording portions.

**11.** The recording/reproducing method of claim 9 or 10, wherein when the optical focal point is moved to different depths in the optical information storage layer, the movement is performed in the layer format region.

**12.** A recording/reproducing apparatus for an optical disc comprising an optical information storage layer, the recording/ reproducing apparatus comprising:

a hologram recording/reproducing optical system to record information in the optical information storage layer and to reproduce the recorded information; and
a control unit to divide the optical information storage layer into a layer format region and a user data region, to divide the layer format and user data regions into virtual layers that are each disposed at different depths in the optical information storage layer, and to control the optical system, such that the optical system records layer information to distinguish the virtual layers from one another, in each of the virtual layers, in the layer format region.

**13.** The recording/reproducing apparatus of claim 12, wherein the hologram recording/reproducing optical system, records data in the virtual layers, in the user data region, by controlling an optical focal point according to the layer information of corresponding ones of the virtual layers.

**14.** The recording/reproducing apparatus of claim 13, wherein in each virtual layer, the hologram recording/reproducing optical system reproduces the recorded data, by controlling an optical focal point according to the layer information of corresponding ones of the virtual layers.

**15.** The recording/reproducing apparatus of claim 13 or 14, wherein when the optical system changes the depth of an optical focal point, in the optical information storage layer, the focal point is disposed in the layer format region.

# FIG. 1

10

11

15

d3

d2

12

$F_b$

13

d1

14

Lr1,Lr2

Lb3

Lb1

Lb4

Lb2

100

# FIG. 2

# FIG. 3A

FOCUS

RADIAL

TANGENTIAL

13

FIRST LAYER
FORMAT REGION

USER DATA
REGION

SECOND LAYER
FORMAT REGION

# FIG. 3B

FOCUS

RADIAL

TANGENTIAL

13

DL2

DL2

DL1

DL1

FIRST LAYER
FORMAT REGION

USER DATA
REGION

SECOND LAYER
FORMAT REGION

# FIG. 3C

FOCUS

RADIAL

TANGENTIAL

DL2
IL4
IL3
IL2
IL1
DL1

DL2

DL1

13

FIRST LAYER
FORMAT REGION

USER DATA
REGION

SECOND LAYER
FORMAT REGION

# FIG. 3D

FOCUS

RADIAL

TANGENTIAL

RL4 RL3 RL2 RL1

DL2
IL4
IL3
IL2
IL1
DL1

DL2

DL1

13

FIRST LAYER
FORMAT REGION

USER DATA
REGION

SECOND LAYER
FORMAT REGION

# FIG. 4A

FOCUS

RADIAL

TANGENTIAL

RL1  RL2

13

DL2

IL4

IL3

IL2

IL1

DL1

DL2

DL1

FIRST LAYER
FORMAT REGION

USER DATA
REGION

SECOND LAYER
FORMAT REGION

# FIG. 4A

FOCUS

RADIAL

TANGENTIAL

RL1  RL2  RL3  RL4

13

DL2

IL4

IL3

IL2

IL1

DL1

DL2

DL1

FIRST LAYER
FORMAT REGION

USER DATA
REGION

SECOND LAYER
FORMAT REGION

## FIG. 5

FIG. 6

FIG. 7

FIG. 8

Europäisches
Patentamt

European
Patent Office

Office européen
des brevets

## EUROPEAN SEARCH REPORT

Application Number

EP 09 16 9087

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X<br><br>A | EP 1 930 886 A1 (FUJIFILM CORP [JP])<br>11 June 2008 (2008-06-11)<br>* paragraphs [0015] - [0022], [0028],<br>[0035], [0049] - [0051], [0078] -<br>[0081], [0120]; figures 2,4,9,10 * | 1-3,6,8,<br>12-14<br>4-5,7,<br>9-11,15 | INV.<br>G11B7/0065<br>G11B7/007<br>G11B7/085<br>G11B7/08 |
| A | JP 2008 181608 A (FUNAI ELECTRIC CO)<br>7 August 2008 (2008-08-07)<br>* abstract * | 1-15 | |
| A | JP 2008 052793 A (SHARP KK)<br>6 March 2008 (2008-03-06)<br>* abstract * | 1-15 | |
| A | JP 2007 066400 A (FUJIFILM CORP)<br>15 March 2007 (2007-03-15)<br>* abstract * | 1-15 | |
| A | JP 2007 094050 A (SANYO ELECTRIC CO;<br>NIPPON TELEGRAPH & TELEPHONE)<br>12 April 2007 (2007-04-12)<br>* abstract * | 1-15 | TECHNICAL FIELDS<br>SEARCHED (IPC)<br><br>G11B |
| A | US 2002/181352 A1 (SAIMI TATSUO [JP] ET<br>AL) 5 December 2002 (2002-12-05)<br>* paragraph [0102]; figure 4A * | 1-15 | |
| X,P | WO 2009/075424 A1 (SAMSUNG ELECTRONICS CO<br>LTD [KR]) 18 June 2009 (2009-06-18)<br>* paragraphs [0035], [0040], [0042],<br>[0051] - [0053], [0070], [0092]; figures<br>2-4,9 * | 1-3,8-15 | |

The present search report has been drawn up for all claims

| Place of search | Date of completion of the search | Examiner |
|---|---|---|
| Munich | 10 December 2009 | Chaumeron, Bernard |

CATEGORY OF CITED DOCUMENTS

X : particularly relevant if taken alone
Y : particularly relevant if combined with another
   document of the same category
A : technological background
O : non-written disclosure
P : intermediate document

T : theory or principle underlying the invention
E : earlier patent document, but published on, or
   after the filing date
D : document cited in the application
L : document cited for other reasons

& : member of the same patent family, corresponding
   document

EPO FORM 1503 03.82 (P04C01)

## ANNEX TO THE EUROPEAN SEARCH REPORT
## ON EUROPEAN PATENT APPLICATION NO.

EP 09 16 9087

This annex lists the patent family members relating to the patent documents cited in the above-mentioned European search report.
The members are as contained in the European Patent Office EDP file on
The European Patent Office is in no way liable for these particulars which are merely given for the purpose of information.

10-12-2009

| Patent document cited in search report | | | Publication date | Patent family member(s) | | | Publication date |
|---|---|---|---|---|---|---|---|
| EP 1930886 | A1 | | 11-06-2008 | JP<br>WO<br>US | 2007066404<br>2007026483<br>2009103415 | A<br>A1<br>A1 | 15-03-2007<br>08-03-2007<br>23-04-2009 |
| JP 2008181608 | A | | 07-08-2008 | NONE | | | |
| JP 2008052793 | A | | 06-03-2008 | NONE | | | |
| JP 2007066400 | A | | 15-03-2007 | NONE | | | |
| JP 2007094050 | A | | 12-04-2007 | NONE | | | |
| US 2002181352 | A1 | | 05-12-2002 | CN | 1392545 | A | 22-01-2003 |
| WO 2009075424 | A1 | | 18-06-2009 | KR<br>US | 20090061802<br>2009153927 | A<br>A1 | 17-06-2009<br>18-06-2009 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- KR 1020080089330